Europäisches Patentamt

European Patent Office

Office européen des brevets

(11) Veröffentlichungsnummer: **0 168 820**
**A2**

(12) **EUROPÄISCHE PATENTANMELDUNG**

(21) Anmeldenummer: **85108918.5**

(51) Int. Cl.⁴: **G 02 B 6/42**

(22) Anmeldetag: **16.07.85**

(30) Priorität: **19.07.84 DE 3426690**

(43) Veröffentlichungstag der Anmeldung: **22.01.86**
**Patentblatt 86/4**

(84) Benannte Vertragsstaaten: **CH DE FR GB LI**

(71) Anmelder: **Siemens Aktiengesellschaft, Berlin und München Wittelsbacherplatz 2, D-8000 München 2 (DE)**

(72) Erfinder: **Störk, Peter, Ing. grad., Parkstrasse 3 B, D-8196 Eurasburg (DE)**

(54) **Justiervorrichtung für Lichtwellenleiter.**

(57) Die Justiervorrichtung weist zwei V-förmige, jeweils aus einem starren und einem elastisch biegbaren Arm bestehende, über ein Schwenklager zu einer X-förmigen Konfiguration verbundene Teilkörper auf, von denen lediglich einer über ein weiteres Gelenk an einem ortsfesten Träger befestigt ist, während der andere Teilkörper mit einer Aufnahmebohrung für einen Lichtwellenleiterendabschnitt versehen ist. Einstellschrauben wirken auf die freien Enden der starren Arme ein, während die elastischen Arme endseitig an einer starren Platte abgestützt sind. Das Verbindungsgelenk der beiden Teilkörper wirkt bei Betätigung der einen Schraube als Schub- und Zuggelenk, bei Betätigung der anderen Schraube als Drehgelenk, so dass der Lichtwellenleiterendabschnitt sowohl in x- als auch in y-Richtung verschoben werden kann.

Siemens Aktiengesellschaft          Unser Zeichen
Berlin und München                  VPA 84 P 1520 E

Justiervorrichtung für Lichtwellenleiter

Justiervorrichtung zum Ausrichten einer Lichtwellenleiterstirnfläche auf eine lichtaufnehmende oder lichtabgebende Fläche, bei der ein der Stirnfläche benachbarter Lichtwellenleiterendabschnitt in einem zur Ebene der lichtaufnehmenden oder lichtabgebenden Fläche parallelen Ebene bewegbaren Haltekörper fixierbar ist und am Haltekörper in ortsfesten Gewinden geführte Einstellschrauben abgestützt sowie der Wirkung der Einstellschrauben entgegenwirkende Federelemente vorgesehen sind.

Eine solche Justiervorrichtung ist aus der DE-AS 26 11 168 bekannt und ermöglicht es, einen Endabschnitt eines Lichtwellenleiters, der in dem dort als Führungsstift bezeichneten Haltekörper fixiert ist, auf eine lichtaufnehmende oder lichtabgebende Fläche auszurichten, die durch die Stirnfläche eines weiteren ortsfest angeordneten Lichtwellenleiters gebildet wird. Eine derartige Justiervorrichtung kann auch ohne weiteres dazu verwendet werden, um die Stirnseite eines Lichtwellenleiters auf die lichtabgebende oder lichtaufnehmende Fläche einer Sende- oder Empfangsdiode auszurichten, wobei die Sende- oder Empfangsdiode ortsfest angeordnet ist und ein der Stirnfläche des Lichtwellenleiters benachbarter Endabschnitt, der in dem bewegbaren Haltekörper fixiert ist, parallel zur lichtabgebenden oder lichtaufnehmenden Fläche so lange verschoben wird, bis die Achse des Lichtwellenleiterendabschnittes mit dem Mittelpunkt der lichtabgebenden oder lichtaufnehmenden Fläche der Sende- oder Empfangsdiode zur Deckung gebracht worden ist.

Bei der bekannten Justiervorrichtung ist es jedoch erforderlich, den als Führungsstift bezeichneten Haltekörper

Rt 1 Ktz / 18.07.1984

- 2 -          VPA 84 P 1520 E

mittels einer Schraubendruckfeder gegen eine völlig plane Gegenfläche gedrückt zu halten, um die einwandfreie Funktion der Justiervorrichtung sicherzustellen.

Aufgabe vorliegender Erfindung ist es dagegen, eine Justiervorrichtung der eingangs genannten Art so auszubilden, daß keine aufeinander gleitenden Präzisionsflächen erforderlich sind.

Erfindungsgemäß ergibt sich die Lösung dieser Aufgabe dadurch, daß der Haltekörper zwei Teilkörper aufweist, die über ein Gelenk verbunden sind, daß die Teilkörper jeweils einen starren Arm aufweisen, daß die freien Enden der starren Arme an den Einstellschrauben abgestützt sind und daß lediglich einer der Teilkörper über ein weiteres Gelenk mit einem ortsfesten Träger verbunden ist, während im Bereich des starren Arms des anderen Teilkörpers eine Aufnahmebohrung für einen Lichtwellenleiterendabschnitt vorgesehen ist.

Durch diese Ausbildung der Justiervorrichtung ist es lediglich erforderlich, die Aufnahmebohrung für den Lichtwellenleiterendabschnitt im Haltekörper und die Achsen der Gelenke genau parallel auszubilden, um sicherzustellen, daß der Lichtwellenleiterendabschnitt mit seiner Achse stets rechtwinklig zu einer lichtaufnehmenden oder lichtabgebende Fläche während des Justiervorganges bewegt wird.

In weiterer Ausgestaltung der Erfindung kann dabei vorgesehen sein, daß der ortsfeste Träger und die beiden Teilkörper einstückig zusammenhängend ausgebildet sind und daß insbesondere der ortsfeste Träger und die beiden Teilkörper mittels des Drahterodierverfahrens aus einem Metallblock herausgearbeitet sind.

Die Gelenke werden auf diese Weise durch schmale stegartige Bereiche des Haltekörpermaterials gebildet, so daß die einzelnen Teile des Haltekörpers völlig spielfrei untereinander und mit dem ortsfesten Träger zusammenhängen.

Nachfolgend wird ein Ausführungsbeispiel der Erfindung anhand von zwei Figuren noch näher erläutert. Dabei zeigen mehr oder weniger stark vergrößert,

Fig. 1 eine Vorderansicht des mit dem ortsfesten Träger zusammenhängenden Haltekörpers und

Fig. 2 den Einbau des Haltekörpers mit dem Träger in ein Gehäuse, das zur Aufnahme einer Sendediode vorgesehen ist.

Im einzelnen ist den Figuren zu entnehmen, daß der Haltekörper 1 für einen Lichtwellenleiterendabschnitt zusammen mit einem etwa U-förmigen Träger 13 aus einem etwa leistenförmigen Metallblock 2 mittels des sogenannten Drahterodierverfahrens herausgearbeitet worden ist. Dabei werden Spalten 3 erzeugt, die den Metallkörper parallel zur Achse eines Lichtwellenleiterendabschnittes durchsetzen, so daß schließlich zwei etwa V-förmige Teilkörper 4, 5 gebildet werden, die über einen als Gelenk 6 wirksamen Steg derart zusammenhängen, daß die beiden Teilkörper zusammen eine etwa X-förmige Konfiguration annehmen.

Jeder der V-förmigen Teilkörper 4, 5 weist einen starren V-Arm 7, 8 und einen elastisch biegsam ausgebildeten V-Arm 9 auf.

Die freien Enden der Arme 9 sind an einer ortsfesten starren Platte 10 und die freien Enden der Arme 7, 8 sind an Einstellschrauben 11 abgestützt. Die Einstellschrauben 11 sind in Gewindebohrungen 12 geführt, die in den ortsfest fixierten Träger 13 eingearbeitet sind.

Mit diesem ortsfesten Träger 13 ist der eine Teilkörper 4 über ein weiteres Gelenk 14 verbunden, das, ebenso wie das Gelenk 6, durch einen schmalen Steg des Metallkörpers gebildet wird, aus dem Haltekörper 1 und Träger 13 herausgearbeitet worden sind.

Im Bereich des starren Armes 8 des Teilkörpers 5 ist eine zu den Achsen der Gelenke 6, 14 parallele Bohrung 15 vorgesehen, die zur Aufnahme eines Lichtwellenleiterendabschnittes bestimmt ist, der zusätzlich, z.B. in einer Führungshülse fixiert sein kann.

Die Anordnung der Gelenke 6, 14 und der Bohrung 15 ist nun so getroffen, daß bei der Einwirkung einer Einstellschraube 11 auf das freie Ende des starren Armes 7 des Teilkörpers 4 das Gelenk 14 ein Schwenklager bildet, um dessen Achse sich die Verbindungslinie zwischen den Gelenken 6 und 14 dreht. Das Gelenk 6 wirkt dabei als Schub- bzw. Zuggelenk, so daß die Bohrung 15 dabei hauptsächlich mit ihrer Achse in einer zur Richtung der Gewindebohrungen 12 rechtwinklig verlaufenden Ebene bewegt wird.

Die auf das freie Ende des starren Armes 8 einwirkende Einstellschraube 11 bewirkt dagegen hauptsächlich eine Bewegung der Bohrung 15 parallel zur Richtung einer Gewindebohrung 12, wobei das Gelenk 6 als Drehgelenk wirksam ist, um welches das freie Ende des starren Armes 8 schwenkt.

Auf diese Weise kann durch Verdrehung der beiden Einstellschrauben 11 die Bohrung 15 parallel zu einer lichtemittierenden Fläche so verschoben werden, daß ein in der
Bohrung 15 fixierter Lichwellenleiterendabscnitt mit seiner Achse genau auf den Mittelpunkt der lichtemittierenden Fläche, z.B. einer Sendediode, ausgerichtet werden
kann.

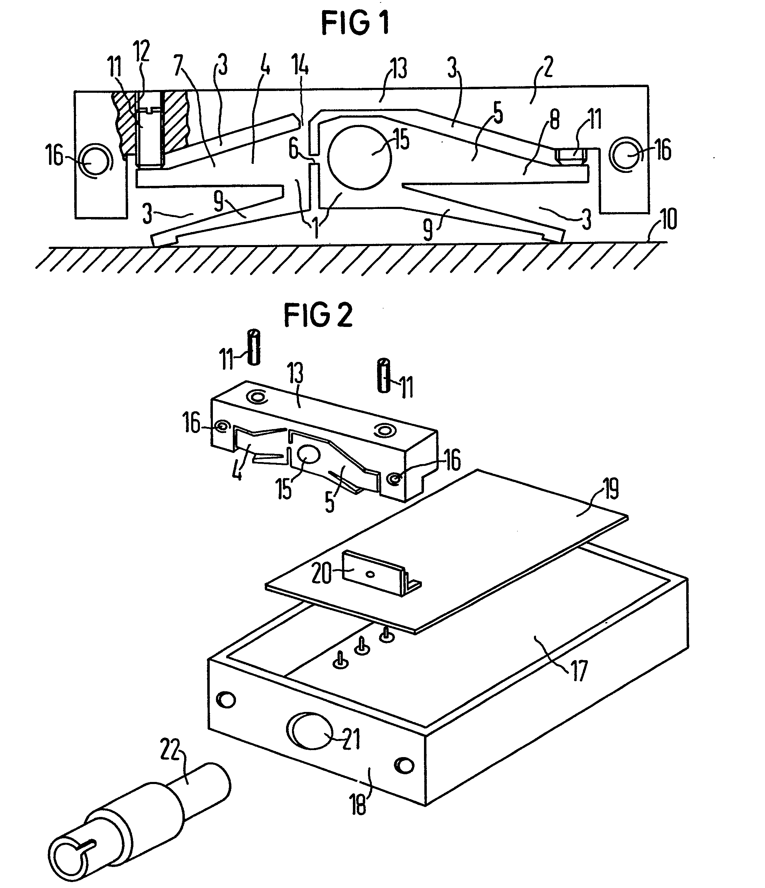

Fig. 2 zeigt, wie die Justiervorrichtung, z.B. mit Hilfe
zweier Gewindebohrungen 16, die in die U-Schenkel des
Trägers 13 eingearbeitet sind, auf der Innenseite eines
Gehäuses 17 mit einer Seitenwand 18 des Gehäuses 17 verschraubt werden kann. An einer in das Gehäuse 17 einsetzbaren Platte 19 ist mittels eines Befestigungswinkels 20
eine Sendediode so befestigt, daß ihre lichtemittierende
Fläche zur Gehäusewand 18 gerichtet ist und parallel zu
dieser verläuft. Durch das Verschrauben des Trägers 13 an
der Gehäusewand 18 wird die Platte 19 im Gehäuse 17 eingeklemmt und dadurch der Träger 13 und die Sendediode
ortsfest im Gehäuse 17 fixiert. Eine Bohrung 21 in der
Gehäusewand 18 ermöglicht es, einen Lichtwellenleiterendabschnitt durch die Gehäusewand 18 hindurch in das Innere
des Gehäuses 17 einzuführen, wobei mit Hilfe geeignet
ausgebildeter Dichtungshülsen 22, die z.B. elastisch
biegbar sind, eine nachgiebige Verbindung zwischen der
Bohrung 21 und der Bohrung 15 geschaffen wird, die in
sich den Lichtwellenleiterendabschnitt aufnimmt, der mit
seiner endseitigen Stirnfläche auf die lichtemittierende
Fläche der Sendediode ausgerichtet werden soll.

Die elastisch biegsamen Arme 9 können eingespart werden,
wenn die Gelenke 6, 14 selbst ausreichend elastisch sind.

<u>Bezugszeichenliste</u>

| | |
|---|---|
| 1 | Haltekörper |
| 2 | Metallblock |
| 3 | Spalten |
| 4, 5 | Teilkörper |
| 6 | Gelenk |
| 7, 8 | starre V-Arme |
| 9 | elastisch biegsame V-Arme |
| 10 | starre Platte |
| 11 | Einstellschrauben |
| 12 | Gewindebohrungen |
| 13 | ortsfester Träger |
| 14 | Gelenk |
| 15 | Bohrung |
| 16 | Gewindebohrungen |
| 17 | Gehäuse |
| 18 | Gehäuseseitenwand |
| 19 | Platte |
| 20 | Befestigungswinkel |
| 21 | Bohrung in Gehäuseseitenwand |
| 22 | Kupplungshülse |

Patentansprüche

1. Justiervorrichtung zum Ausrichten einer Lichtwellenleiterstirnfläche auf eine lichtaufnehmende oder lichtabgebende Fläche, bei der ein der Stirnfläche benachbarter Lichtwellenleiterendabschnitt in einem zur Ebene der
lichtaufnehmenden oder lichtabgebenden Fläche parallelen
Ebene bewegbaren Haltekörper fixierbar ist und am Haltekörper in ortsfesten Gewinden geführte Einstellschrauben
abgestützt sowie der Wirkung der Einstellschrauben entgegenwirkende Federelemente vorgesehen sind.
d a d u r c h   g e k e n n z e i c h n e t ,
daß der Haltekörper (1) zwei Teilkörper (4, 5) aufweist,
die über ein Gelenk (6) verbunden sind, daß die Teilkörper (4, 5) jeweils einen starren Arm (7, 8) aufweisen,
daß die freien Enden der starren Arme (7, 8) an den Einstellschrauben (11) abgestützt sind und daß lediglich
einer der Teilkörper (4) über ein weiteres Gelenk (14)
mit einem ortsfesten Träger (13) verbunden ist, während
im Bereich des starren Arms (8) des anderen Teilkörpers
(5) eine Aufnahmebohrung (15) für einen Lichtwellenleiterendabschnitt vorgesehen ist.

2. Justiervorrichtung nach Anspruch 1,
d a d u r c h   g e k e n n z e i c h n e t ,
daß der ortsfeste Träger (13) und die beiden Teilkörper (4, 5)
einstückig zusammenhängend ausgebildet sind.

3. Justiervorrichtung nach Anspruch 2,
d a d u r c h   g e k e n n z e i c h n e t ,
daß der ortsfeste Träger (13) und die beiden Teilkörper
(4, 5) mittels des Drahterodierverfahrens aus einem Metallblock (2) herausgearbeitet sind.

# FIG 1

# FIG 2